# EUROPEAN PATENT APPLICATION

(11) **EP 2 354 958 A1**
(43) Date of publication of application: **10.08.2011**
(21) Application number: 11153266.9
(22) Date of filing: 03.02.2011
(51) Int. Cl.: G06F 13/38, H04L 12/40

(54) **A device arranged to use an electromagnetic link to replicate a serial port**

(30) Priority: 03.02.2010 GB 1001739
(71) Applicant: LM Technologies Ltd., Birmingham, West Midlands B3 1UF (GB)
(72) Inventor: Chanana, Kanwalpreet Singh, LONDON, N3 2QS (GB); Simms, Michael John, London, HA8 0PG (GB)
(74) Representative: Gosnall, Toby

(57) **Abstract**

A device (108) arranged to connect to a serial port (104,114a) and to use an electromagnetic link (116a) to replicate a serial connection thereto, the device (108) comprising a link-processing module (118a) arranged to establish the electromagnetic link and at least one switching device (112) capable of being switched from at least a first configuration to a second configuration and the link-processing module (118a) being further arranged to monitor at least one line of the serial port (114a) and the switching device (112) being arranged to connect the or each monitored line (120a) to the link-processing module (118a) in a first and second configurations; the link-processing module (118a) being further arranged to
send a command packet across the electromagnetic link if a change is detected in the at least one monitored line (120a); and
upon receipt of a command packet from the electromagnetic link to make a change to a pin of the serial port (114a) to which the device is connected thereby replicating a change of line represented by the command packet received thereby.

## Description

### Field of the invention

The invention relates to a device arranged to use an electromagnetic link to replicate a serial port and related methods. Conveniently, the device is a wireless communication device, and in particular uses Bluetooth communication. In particular, a pair of such devices may be used to replicate a serial cable.

### Background of the invention

Wireless replacements for standard wired connections have become commonplace in modern computer technology. For example, a home computer may connect to the Internet through a wireless broadband MODEM, and it may transmit data to a printer using Bluetooth^{TM}. Such wireless connections are neat and convenient, but some of today's computer equipment is not capable of wireless communication. Examples of such equipment include handheld barcode readers that connect to printers via RS232 cables, and medical equipment that use cables to transfer data to PDAs, etc. Further, legacy equipment may not be able utilise such wireless technology and be arranged to use older technology.

Wireless cable replacement devices are sometimes used to achieve wireless connectivity between devices that would not otherwise be capable of it. For example, commercial products include Bluetooth serial cable replacements to emulate a RS232 serial cable link between devices, or a wireless Bluetooth USB dongle that provides Bluetooth connectivity via a computer's USB port.

### Summary of the invention

According to a first aspect of the invention there is provided a device arranged to connect to a serial port and to use an electromagnetic link to replicate a serial connection thereto, the device comprising a link-processing module arranged to establish the electromagnetic link and to control at least one switching device capable of being switched from at least a first configuration to a second configuration and the link-processing module being further arranged to monitor at least one line of the serial port and further arranged to control the or each switching device between the first and second configurations to connect the or each monitored lines to the link-processing module in a first and second configurations; the link-processing module being further arranged to
send a command packet across the electromagnetic link if a change is detected in the at least one monitored line; and
upon receipt of a command packet from the electromagnetic link to make a change to a pin of the serial port to which the device is connected thereby replicating a change of line represented by the command packet received thereby.

As such, the device is arranged to replicate one or more serial control lines, using the command packet, which is otherwise provided by a wired serial cable (such as RS232, RS422, RS423, RS449, RS485 or the like). Such a device is believed useful in order to replicate serial communication between hardware that would otherwise not execute complete functionality while using the available wireless devices. For example, in one embodiment a pair of such devices may be arranged to allow a computer (such as a PC) to communicate with a printer and allow the printer to send a 'paper out' signal back to the computer. As such, a pair of such devices may be arranged to replicate a serial cable.

The skilled person will appreciate that the term packet is intended to cover a plurality of packets of data as well as a single packet of data.

As used herein, the term 'wireless communication' encompasses Bluetooth^{TM} communication, WiFi (ie as specified in the IEEE 802.11 specification) communication, (UWB) ultra-wideband communication, IrDA (Infra Red Data Association), Zigbee (as specified in the IEEE802.15.4-2003) or any suitable communication via electromagnetic signals that does not make use of a wired transmission medium.

The skilled person will appreciate that the technologies mentioned in the preceding paragraphs are radio or light based communication mediums and as such they can be considered to be 'wireless' technologies. As such, a Bluetooth device, for example, may be considered a 'wireless' device. The device may be connected to a serial port using a length of cable, etc. and as such the device could still be referred to as a wireless device since it communicates via Bluetooth. As used herein, the term Bluetooth™ is intended to refer to that original protocol and its derivatives such as the Low Energy and other derivatives, such as: Bluetooth 1.x; 2.0; 2.0 + EDR; 2.1 + EDR; 3. 0.

The device may be arranged to utilise a wireless link.

In particular, the devices may be arranged to replicate an RS232, RS422, RS423, RS449, RS485, or other serial, connection. This replication may be irrespective of serial device type (DTE (Data Terminal Equipment) or DCE (Data Communication Equipment)); ie the device may be able to connect to either one or both of DTE and DCE equipment. In particular one device may be arranged to communicate with another such device to, between them, provide a serial connection.

In particular, the transceiver may be arranged to generate a Bluetooth connection. Bluetooth is believed advantageous as it is readily available and provides a robust short range wireless link with significant data throughput. By significant, it is meant that Bluetooth is able to pass data at a high enough speed in order to replicate serial links that it may be desired to replicate.

The command packet may be a command, which may be a MODEM status command such as the one referred to in the GSM 07.10 standard.

The command packet may be predetermined data transmitted across the replicated serial connection. Such predetermined data may take the form of a header, or perhaps embedded data of a predetermined content or may be as a predetermined data exchange.

Conveniently, the device may be arranged to be configured to connect to a Date Terminal Equipment (DTE) or a Data Communication Equipment (DCE) .

In some embodiments, the device has a first configuration that uses a first level shifting circuit to be able to connect to a DTE. Further, in a second configuration the devices may use a second level shifting circuit, different from the first, to connect to a DCE. The use of two level shifting circuits in this manner provides a convenient manner in which to allow the device to be moved between the two configurations.

Conveniently, the used configuration can be selected by a single switching means which may be a single switch. Such an arrangement may provide convenient for a user since it allows the device to be configured easily. The switching may be accomplished by means of software or by predetermined data transmitted across the wireless link.

The device may be arranged to monitor a plurality of lines of a serial port to which, in use, it is attached.

In one particular embodiment the device may be arranged to monitor at least one of a pair of lines. For example, in RS232 communications, a number of pairs of lines exist such as CTS/RTS; DTR/DSR and the device may be arranged to monitor at least one of the lines of at least one of these pairs.

Generally, one of the lines of a pair is used as output and the other of the lines of each pair is used as an input. For example in RS232, the direction of a line being defined with respect to Data Terminal Equipment (DTE) device type, the DTR line is generally used as an output and the DSR line is generally used as an input. The device is conveniently arranged to monitor the line used as an output; the first predetermined line may be an output. The device may be further arranged to assert or deassert a signal change, represented by the command packet, to a line that is an input; ie the second predetermined line may be an input.

Some embodiments may monitor a plurality of pairs of lines. Conveniently, the device is arranged such that the first predetermined line which it monitors used as an output within each pair.

In alternative, or additional, embodiments the device may be arranged to monitor both lines of a pair or to monitor the input line of a pair.

According to a second aspect of the invention there is provided a kit comprising two devices according to the first aspect of the invention which are arranged to communicate with one another to provide a serial connection between two devices, which may be a DTE and a DCE.

Such a kit is believed beneficial since it provides a user with all that is required to replicate a serial cable.

The kit may comprise driver software arranged to configure the serial machines with which the devices are to be utilised.

According to a third aspect of the invention there is provided a method of replicating a serial cable using an electromagnetic link, the method comprising:
i. using a link-processing module to establish an electromagnetic link;
ii. using a switching device to connect at least one line of a serial port in either a first or a second configuration;
iii. using the link-processing module to monitor the at least one line of a serial port to which the link-processing module is connected;
iv. using link processing module to send a command packet across the electromagnetic link if a change is detected in the at least one monitored line; and
v. upon receipt, by the link-processing module, of a command packet from the electromagnetic link to make a change to a pin of the serial port to which the device is connected thereby replicating a change of line represented by the command packet received thereby.

Conveniently, the method replicates an RS232 serial connection.

Generally, the method utilises a Bluetooth link to transmit the command packet from a first device to a second device .

Some embodiments may utilise the Bluetooth Serial Port Profile (SPP) to transmit data, and which may include using the MODEM status command as the command packet.

Conveniently, the command packet comprises part of the protocol that is used to provide the electromagnetic link.

According to a fourth aspect of the invention there is provided a machine readable medium containing instructions which when read by a machine cause that machine to perform as the device of the first aspect of the invention; or when read by a machine cause that machine to perform the method of the third aspect of the invention

In any of the above aspects of the invention the machine readable medium may comprise any of the following: a floppy disk, a CD ROM, a DVD ROM / RAM (including a -R/-RW and + R/+RW),EPPROM, FLASH Memory, a hard drive, a solid state memory (including a USB memory key, an SD card, a Memorystick™, a compact flash card, or the like), a tape, any other form of magneto optical storage, a transmitted signal (including an Internet download, an FTP transfer, etc), a wire, or any other suitable medium.

According to a fifth aspect of the invention there is provided a device arranged to connect to a serial port and to use an electromagnetic link to replicate a serial connection, the device comprising processing circuitry and a transceiver arranged to create the electromagnetic link,
the processing circuitry being arranged to monitor at least a first predetermined line of the serial port and if a signal is asserted or deasserted on that line to send, via the transceiver, a command packet indicative of a change in the line; and / or
the processing circuitry being arranged to monitor signals received at the transceiver to determine whether a command packet indicative of the change in line has been received, and if such a command packet has been received to assert or deassert a signal to a second predetermined line of the serial port, which may or may not be the same as the first predetermined line.

According to a further aspect of the invention there is provided a device arranged to connect to a serial port which is conveniently arranged to use an electromagnetic link to replicate a serial connection thereto. The device may comprise a link-processing module arranged to establish the electromagnetic link and may be further arranged to control at least one switching device capable of being switched from at least a first configuration to a second configuration. The link-processing module may be further arranged to monitor at least one line of the serial port and further arranged to control the or each switching device between the first and second configurations to connect the or each monitored lines to the link-processing module in a first and second configurations. Further, the link-processing module may be further arranged to
send a command packet across the electromagnetic link if a change is detected in the at least one monitored line; and/or
upon receipt of a command packet from the electromagnetic link to make a change to a pin of the serial port to which the device is connected thereby replicating a change of line represented by the command packet received thereby.

Further, the skilled person will appreciate that features discussed in relation to any one aspect of the invention are suitable, mutatis mutandis, for other aspects of the invention.

### Brief description of the drawings

These and other features of embodiments of the invention will be understood from the following description of an exemplary embodiment, made with reference to the accompanying drawings of which:
**Figure 1** schematically shows a wireless serial cable replacement system;
**Figure 2** schematically shows an adaptor circuit of the Bluetooth serial cable replacement device of the system of Figure 1;
**Figures 3a** **and** **3b** schematically show the connections in the adaptor circuit of Figure 2 when it is, respectively, in a DTE and DCE configurations;
**Figures 4a** **and** **4b** are flow charts illustrating the steps performed by a replication module in the adaptor circuit of Figure 2 when, respectively, representing a signal change using a command packet and interpreting a command packet to produce a signal change; and
**Figure 5** is a flow chart outlining a specific embodiment of the invention.

### Detailed description of the drawings

It is convenient to describe embodiments of the present invention with reference to the RS232 serial protocol and the Bluetooth™ protocol. However, the skilled person will appreciate that embodiments of the invention may have wider applicability and may utilise other electromagnetic communication technologies (such as WiFi (ie as specified in the IEEE 802.11 specification) communication, (UWB) ultra-wideband communication, IrDA (Infra Red Data Association), Zigbee (as specified in the IEEE802.15.4-2003) or any suitable communication) and may replicate other serial protocols (such as RS422, RS423, RS449, RS485, or the like).

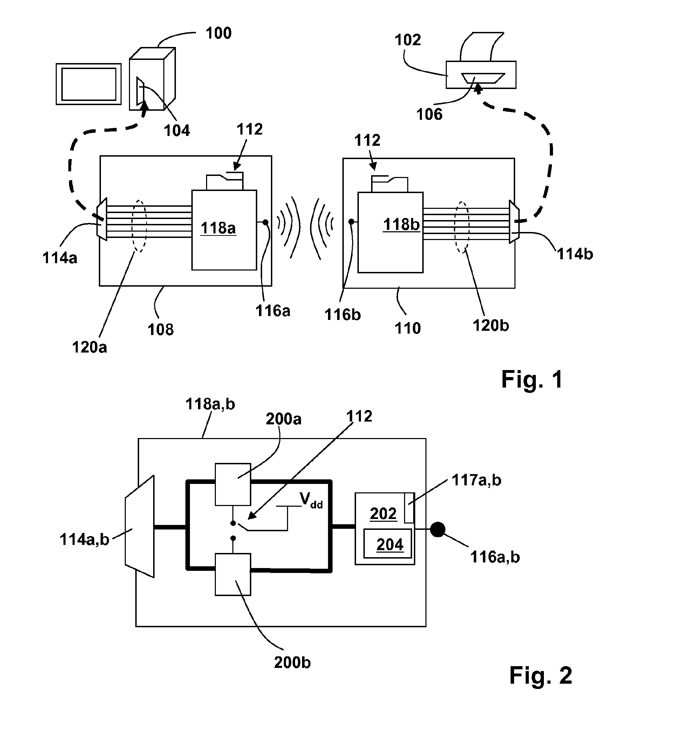

Figure 1 shows two wireless devices in communication with one another. The first wireless device 100 is, in this embodiment, a Personal Computer (ie a PC) which has an x86 architecture. The second wireless device 102 is a printer. The printer 102 may be thought of as a legacy printer in that, in this embodiment, it is fitted with an RS232 serial interface to which data is sent in order to print.

The skilled person will appreciate that because the devices operate using a Bluetooth™ connection that it is convenient to refer to them as 'wireless' devices. This does not mean they are not connected to a serial port without a wire but refers to the 'wireless' connection between the two devices over the Bluetooth link.

It is convenient to refer to transmission between a PC 100 and a printer 102 since these provide common examples of where a serial connection may be used. However, the skilled person will appreciate that embodiments of the invention may be used between any suitable devices with serial interface support.

Thus, in order to print, the PC 100 sends data to the printer 102 via an RS232 serial port 104 thereon. Such an RS232 port is commonly found as a 9 pin D-type connector, although 25/15 pin D-type connectors may also be found. The pin outs of the D-type connectors are commonly found in the RS-232 specification. A similar D-type connector 106 is provided on the printer 102.

In RS232 parlance, both the PC 100 and the printer 102 are commonly referred to as Data Terminal Equipment (DTE). It will be appreciated that, in other examples, the printer 102 could also be arranged as a Data Circuit terminating Equipment (DCE).

Referring back to Figure 1, the Data Terminal Equipment 'DTE' 100 (in this case the PC) is in wireless communication with another Data Terminal Equipment 'DTE' (in this case a printer 102). This wireless communication is achieved using a wireless adapter according to an embodiment of the invention as will now be described.

Connected to the DTE 100 is a Bluetooth Serial Cable Replacement (BSCR) device 108 which communicates with a BSCR device 110 connected to the DTE/printer 102. Although shown separate from the PC 100/printer 102 the BSCR 108,110 may in some embodiments be connected directly into the device (eg PC 100, printer 102) in which it is in RS232 communication. However, it would also be possible to connect the BSCR 108, 110 via a length of cable if this were more convenient. Moreover, as will be expanded upon hereinafter the BSCR 108, 110 connected to the PC 100, printer 102 respectively may in some embodiments be the same specification of wireless device. Thus, a pair of BSCR devices 108, 110 may be used to establish a serial connection between two devices.

The BSCR devices 108, 110 connected to each of the PC 100 / printer 102 have the same construction; whether they are configured for DTE or DCE operation, i.e. configured for connection to a DTE or DCE, is determined by the position of a selector switch 112 provided on each. It can be seen that the switch 112 on the BSCR 108 and the switch on the BSCR 110 are each in a first position to allow BSCR 108 and BSCR110 to be connected to DTE(PC 100) and DTE(printer 102) respectively. Thus, the BSCR 108, 110 are each configured to communicate with the two DTE devices (ie the PC 100 and the printer 102).

When connected in this way the pair of BSCR devices 108,110, each configured for DTE operation, can replicate using Bluetooth connection between the two BSCR's 108,110, a serial cable connection between the PC 100 and the printer 102. That is, each of the BSCR devices 108, 110 converts RS232 data (ie data and control signals), from one of the PC 100 and printer 102 into Bluetooth signals.

The so-converted Bluetooth signals are received by the other of the BSCR devices 108,110 and are interpreted by it to re-produce the RS232 signals that were originally generated by the PC 100, printer 102. Thus, the signal produced by the BSCR 108, 110 are such that they appear, to the other of the PC 100, printer 102, to be in substantially the same format that they would have been had they been transmitted over a serial cable.

Below, this embodiment is described in terms of signals transmitted or received along lines. 'Line' is used as shorthand for the medium by which the signals are carried, and may be a connection within an integrated circuit, a track on a PCB, a wire or the like, as appropriate.

As shown in Figure 1, the BSCR device 108, 110 is made up of the selector switch 112, an RS232-compliant nine-pin serial connector 114a,b and an antenna 116a,b connected to an adaptor circuit 118a,b, the adaptor circuit providing processing circuitry. The antenna 116a,b provides a portion of a transceiver with a portion of the processing circuitry 117a,b also providing a portion of the transceiver. The transceiver establishes the Bluetooth connection between the two devices 108,110.

The adaptor circuit 118a,b is connected by seven lines 120a,b TxD, RxD, RTS, CTS, GND, DTR and DSR to respective pins of the serial connector 114a,b, which carry the respective + /- 12V RS232 signals of the same name. The serial connector 114a, b of the BSCR device 108 is connected to the serial port 104 of the PC 100 and the serial connector 114b of the BSCR device 110 is connected to the serial port 106 of the printer 102.

Referring to Figure 2, the adaptor circuit 118a,b comprises a first and a second voltage level shifter circuits 200a, b connected between the serial connector 114a,band a Bluetooth chip 202. The Bluetooth chip 202 provides an example of a link-processing module and the level shifters 200 may be thought of as switching devices. In this embodiment, the Bluetooth chip is provided by an LM Technologies LM072 module. It will be appreciated that for each BSCR 108, 110 the line connecting the serial connector 114a,b to the Bluetooth chip 202, whilst shown as a single line, comprises seven lines (TxD, RxD, RTS, CTS, GND, DTR and DSR).

The level shifters are arranged to convert the RS232 signal levels (ie + /-12V, + 15V/-9V, + 5V/OV) to logic levels of 0 to 3.3v suitable for operation with the Bluetooth chip 202. The first voltage level shifter 200a is arranged such that it passes the connections to the Bluetooth chip 202 as if a DTE device is connected to the serial connector 114a,b and the second of the level shifters, 200b, is arranged such that it passes the connections to the Bluetooth chip 202 as if a DCE device is connected to the serial connector 114a,b. As such, in a first configuration, the device 108, 110 uses the first voltage level shifter 200a to connect to a DTE and in a second configuration the device 108, 110 uses the second voltage level shifter 200b to connect to a DCE.

Seven lines UART_Tx, UART_Rx, UART_CTS, UART_RTS, UART_GND, DTR_Out and DTR_Det are connected from respective pins of the Bluetooth chip 202 to each of the voltage level shifters 200a, 200b.

The Bluetooth chip 202 is a standard single-chip Bluetooth solution, such as the BlueCore4 from Cambridge Silicon Radio (which is incorporated into the LM072 module), and as such has a pair of data line pins and a pair of flow control pins. These pins may be used for conventional serial communication e.g. according to the Bluetooth Serial Port Profile 'SPP', and connect respectively to lines UART_Tx, UART_Rx, UART_CTS and UART_RTS. The Bluetooth chip 202 also has a plurality of programmable pins, two pins of which are connected to respective pins of each of the down- and up-shifters 200a,b, via the lines DTR_Out and DTR_Det respectively. Three further pins PI01, PI02, PI03 of the plurality of programmable pins are used in the adaptor circuit 118a,b, as will be described in more detail below.

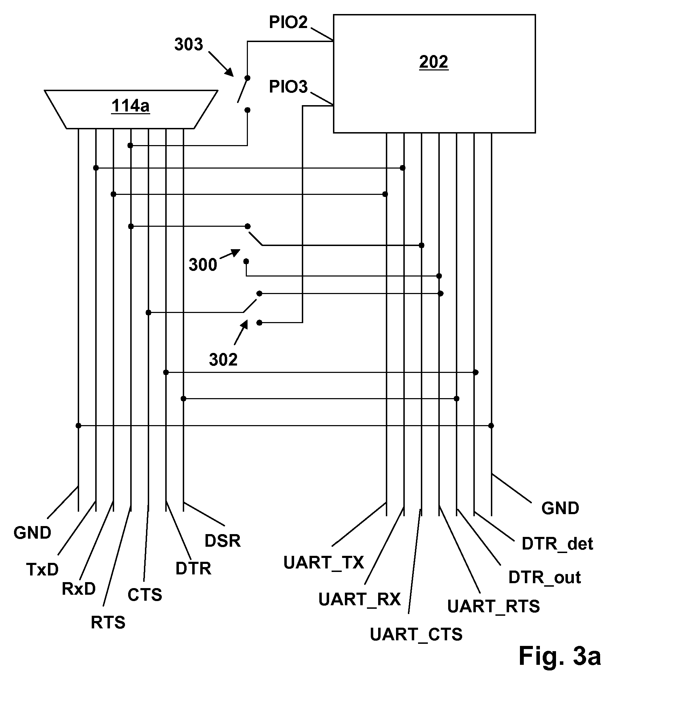

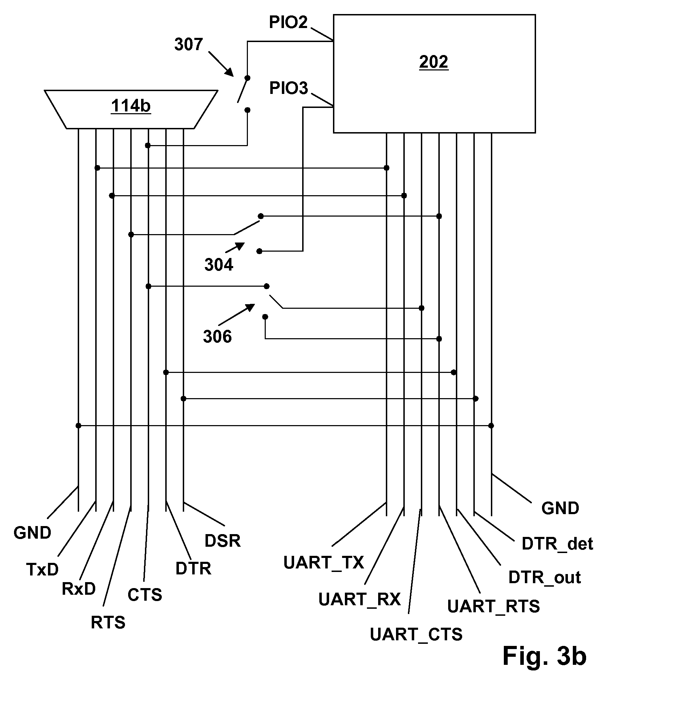

Referring to Figures 3a and 3b, when the BSCR device 108 is configured for DTE operation by the selector switch 112 the DTE-DCE shifter 200a is enabled and the DCE-DTE shifter 200b is not, so the respective pins of the serial connector 114a are connected to the Bluetooth chip 202 according to a DTE configuration (shown schematically in Figure 3a). For DCE-DTE operation it is the DCE-DTE shifter 200b and not the DTE-DCE shifter 200a that is enabled, and so the respective serial connector 114b pins are connected to the Bluetooth chip 202 according to a DCE configuration (shown schematically in Figure 3b). The selector switch 112 is used to selectively enable the respective voltage level shifters 200a,b, which as described above are not enabled at the same time. In both configurations the UART_GND signal of the Bluetooth chip 202 is connected to the GND signal of the serial connector 114a, b.

In other embodiments, a switching device other than a selector switch might be used to select the level shifting circuit. For example, a transistor, a tri-state buffer or the like may be used. Alternatively, software may be used to select the level shifting circuit, which may be software running on the Bluetooth chip 202. The software may select the level shifting circuit in response to receiving some predetermined data from another device.

Described below are the alternative connections between the serial connector 114a,b and the Bluetooth chip 202 corresponding to the respective configurations of the BSCR device 108 i.e. the connections for DTE configuration and the connections for DCE configuration. For simplicity, these are described as though they are direct connections, or for some lines as connections via two-way switches (which may be termed switching devices). The two-way switches should be understood functionally and not literally. That is, they are described as two-way switches for convenience because the functionality of a two-way switch is readily understood. In fact, the connections are made between the serial connector 114a,b and the Bluetooth chip 202 (i.e. the link processing module) via the voltage level shifters 200a,b as well as control circuitry such as tri-state buffers and the like. That is, in practical embodiments the two way switches would generally be replaced with tri-state buffers, transistors or the like which are typically controlled by the Bluetooth chip 202 (ie the link-processing module). The manner of these connections will be appreciated by those skilled in the art without further explanation, so for clarity only a functional description of the connections will be given.

Referring to Figure 3a, in the DTE configuration four lines TxD, RxD, DTR, DSR are connected from the serial connector 114a, via lines UART_Rx, UART_Tx, DTR_Det, DTR_Out respectively, to the Bluetooth chip 202. The line RTS from the serial connector 114a is connected to a first terminal of a first two-way switch 300, which in turn is connected via the line UART_CTS to the Bluetooth chip 202. The second terminal of the first two-way switch 300 is connected via UART_RTS line to the Bluetooth chip 202. The line CTS from the serial connector 114a is connected to a first terminal of a second two-way switch 302, which in turn is connected via the line UART_RTS to the Bluetooth chip 202. In this embodiment, the line RTS is also connected to a first one-way switch 303 which in turn is connected to the second further programmable pin PI02 of Bluetooth chip 202. This may be thought of as connecting the lines of the serial port to the Bluetooth chip 202 in a first configuration using the switching circuit provided by the level shifter 200 (ie a switching device).

Referring to Figure 3b, in the DCE configuration four lines TxD, RxD, DTR, DSR are connected from the serial connector 114b, via lines UART_Tx, UART_Rx, DTR_Out, DTR_Det respectively, to the Bluetooth chip 202. The line RTS from the serial connector 114b is connected to a first terminal of a third two-way switch 304, which in turn is connected via the line UART_RTS to the Bluetooth chip 202. The line CTS from the serial connector 114b is connected to a first terminal of a fourth two-way switch 306, which in turn is connected via the line UART_CTS to the Bluetooth chip 202. The second terminal of the fourth two-way switch 306 is connected via UART_RTS line to the Bluetooth chip 202. In this embodiment, the line CTS is also connected to a second one-way switch 307 which in turn is connected to the second further programmable pin PI02. This may be thought of as connecting the lines of the serial port to the Bluetooth chip 202 in a second configuration using the switching circuit provided by the level shifter 200 (ie a switching device).

The four two-way switches 300,302,304,306 and the two one-way switches 303, 307 are controlled by a signal from the first further programmable pin PI01 (not shown) of the Bluetooth chip 202. The second terminals of the second and third two-way switches 302, 304 are connected to the third further programmable pin PI03. The signal from the first further programmable pin PI01, and so the states of the switches 300,302,303,304,306,307, is dependent on whether flow control is enabled or disabled.

The first terminal of each two-way switch is connected through that switch, and the one-way switches 303,307 are both open (i.e. not conducting), when the BSCR device 108,110 has flow control enabled. When flow control is disabled, the two-way switches 300,302,304,306 are set so as to connect the respective second terminals through them, and the first and second one-way switches 303,307 are closed so as to the RTS and CTS signals to the second further programmable pin PI02. In this case, the third further programmable pin PI03 is transmitted via the second switch 302 to the CTS line in the DTE configuration (Figure 3a) and via the third switch 304 to the RTS line in the DCE configuration (Figure 3b), and serves to produce an effect equivalent to connecting together the RTS and CTS in the RS232 connectors 114a,b. The skilled person will appreciate that this is a technique commonly used in RS232 communications for when flow control is not enabled. When flow control is disabled, the second further programmable pin PI02 is still able to detect changes in the signal on the RTS or CTS line in the DTE or DCE configuration and the third further programmable pin PI03 will allow the Bluetooth chip 202 to output signal on the CTS or RTS when in the DTE or DCE configuration.

Referring again to Figure 2, a replication module 204 is firmware that resides in on-chip memory in the Bluetooth chip 202. The replication module 204 operates in an application layer 'above' the Bluetooth protocol stack along with the radio residing on the Bluetooth chip 202. The following describes how the replication module 204, operating on the respective Bluetooth chips 202 of the two BSCR devices 108,110, replicates signals on the lines DTR, DSR using a Modem Status command. Here, such replication involves converting a signal DTR, DSR, originating from one of the PC 100 and/or printer 102, into a Modem Status command that can be interpreted by the other replication module 204 in communication with the PC 100 and/or printer 102 to produce a signal representative of the converted signal DTR, DSR. The produced signal is generally the same as it would be if it were transmitted over a RS232 serial cable. In the following description a DTR, RTS signal from the PC 100 to the printer 102 is replicated.

The data signals TxD, RxD communicated in a conventional manner, with which the skilled person will be familiar, so no further description of this is necessary.

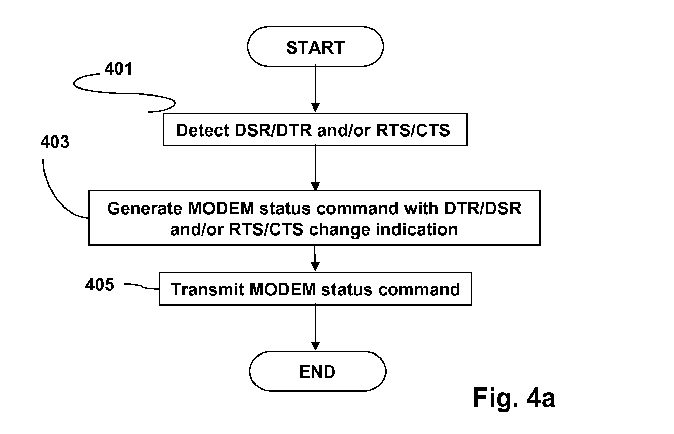

Referring to Figure 4a, at step 401 a DTE-configured BSCR wireless device 108 detects a DTR event i.e. the Bluetooth chip 202 detects a change in level of the DTR signal on the DTR_Det line. This may be thought of as the Bluetooth chip 202 (ie a portion of the processing circuitry 118a,b) monitoring at least a first predetermined line of the serial port 114a,b. This is processed by the Bluetooth chip 202 as an interrupt, which the replication module 204 receives in the form of an event signal.

In response to the event signal, at step 403 the replication module 204 generates a MODEM Status command, which may be thought of as a command packet. In this embodiment the MODEM Status command contains 1 bit each for detected DTR signal and RTS/CTS signal: Bit values can be High or low to correspond to the respective 'high' and 'low' states of the detected DTR signal; and after the MODEM Status command has been generated at step 405 it is transmitted via the antenna 116a,b; ie a command packet indicative of a change in the first predetermined line of the serial port 114a,b is transmitted via the antenna 116a,b (which constitutes a portion of the transceiver).

In other embodiments, rather than using a command, a DTR/DSR event could be sent within data sent on the TxD/RxD lines and encoded in a predetermined manner. Thus, in such embodiments data sent from and/to a BSCR device identifying an event on a predetermined line of the serial port may be thought of as a command packet.

In additional, or alternative, embodiments the BSCR wireless device 108 may also monitor the CTS/RTS lines in order to detect a CTS/RTS event; ie the Bluetooth chip 202 detects a change in level (ie an assertion or deassertion) of at least one of these lines. Upon detection of such a change in level the above description of detection of a DTR/DSR event is replicated mutatis mutandis. In particular a different bit of the MODEM status command is set when compared to the occurrence of a DTR/DSR event.

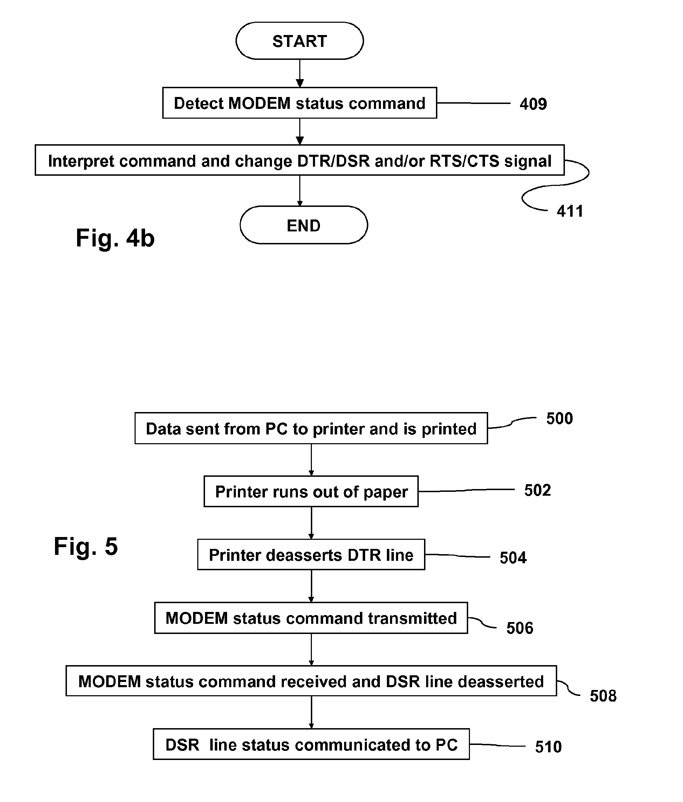

Referring to Figure 4b, at step 409 a DTE-configured BSCR 110 receives, at step 409, a MODEM Status command. This command is part of a predetermined data that is received by the Bluetooth chip 202, which the Bluetooth chip 202 processes as an interrupt . The replication module 204 detects the interrupt in the form of a data receive event signal.

In response to the event signal, at step 411 the replication module 204 interprets the received MODEM Status command to determine its configuration. The replication module then produces a DSR signal on the DTR_Out line with a value corresponding to the configuration of the received MODEM Status command, as interpreted; ie the Bluetooth chip 202 (comprising a portion of the processing circuitry 118a,b) applies a signal to a second predetermined line of the serial port 114a,b. In this embodiment the first and second predetermined lines are different but this need not be the case and the first predetermine line may be the same as the second predetermined line.

If an event had occurred on an RTS/CTS line in step 401 then the Bluetooth chip 202 would encode a bit of the MODEM status command to indicate that one of these lines had been asserted. In such an embodiment, in step 411 of the method the replication module 204 would interpret the MODEM status command and assert the correct pin to replicate the RTS/CTS lines as output

The replication module 204 determines which of the DTR_Out and/or UART_CTS lines should be altered according to the bits that have been set within the MODEM status command received by the Bluetooth chip 202.

The devices 108, 110 may be user configurable in order to alter which lines of the serial port are monitored thereby. Such configuration may be facilitated by the provision of software that is run on a computing platform to which the device is connected.

Thus, in such an embodiment, the skilled person will appreciate that more than one line of the serial port is being monitored by a Bluetooth device;

A DTR signal from the printer 102 connected to DSR signal of PC 100 is replicated in a similar manner to that described above, i.e it is a change in level of the DTR signal on the DTR_Det line that is detected at step 401; and it is a DSR signal on the DTR_Out line that is produced at step 411.

In an example in which the BSCR was configured as a DCE device then the Bluetooth chip 202 would detect a change in level on the DSR signal on the DTR_Det line that is detected at step 401, and it is a DSR signal on the DTR_Out line that is produced at step 411. As the device is now configured as shown in Figure 3b this causes a DSR pin to be asserted on the serial port 114b.

Above, an embodiment has been described in which pairs of BSCR devices 108, 110 communicate with each other to replicate a serial cable connection. In another embodiment one BSCR device 108,110 could be used to communicate with any Bluetooth-enabled device such as a PC, PDA, mobile phone or the like. In that case, the use of a command packet, in the form of predetermined data, to represent a serial cable signal is advantageous because the PC, PDA etc. need only be adapted to interpret equivalent received data that might otherwise be used to represent the serial cable signal.

Use of the Modem Status command to represent a DTR or DSR (as well as the CTS and RTS) signals has been described, but the skilled person will appreciate that the invention can be applied to the use of other forms of command to represent other signals..

In the embodiment described above, a signal is represented by a command that has a respective configuration for each discrete level of the signal (e.g. 'high' and 'low'). In another embodiment, the command may be used to signify only that there has been a change in level of the signal e.g. a DTR/DSR signal has toggled from 'low' to 'high' or vice versa. After being received and interpreted, such a command would cause the receiving device to toggle the level of the corresponding output signal e.g. DTR_Out.

In one embodiment the BSCR devices 108, 110 in the arrangement of Figure 1 allow the printer 102 to send a 'paper-out' signal back to the PC 100. The specifics of such an embodiment are briefly described in relation to the flow chart of Figure 5.

It is assumed that data is being sent from the PC 100 to the printer 102 and as such, and in line with the RS232 standard, the PC 100 has asserted the RTS line and the printer 102 has asserted its RTS line. Data is being sent from the PC 100 from its TxD line which arrives at the RxD pin of the printer 102 and is subsequently printed. In this state 500 the printer 102 operates normally.

However, in the embodiment being described, the printer 102 runs out of paper which causes the printer to de-assert 504 the DTR line of its serial port 114b. Looking at Figure 3b, it can be seen that this causes the DTR_det pin of the Bluetooth chip 202 to be taken low and causes an interrupt within the Bluetooth chip 202 which is handled by the firmware there within.

Thus the processing circuitry 118b causes the Bluetooth connection to the processing circuitry 118a to transmit a MODEM status command which is received by the processing circuitry 118a. Referring to Figure 3a, receipt of the of the MODEM status command over the Bluetooth connection causes the Bluetooth chip 202 to de-assert its DTR_out line which causes the DTR pin of the serial port 114a to go low 508.

This DTR pin is connected to the PC 100 and alerts the PC 100 that the printer 102 has raised an out of paper signal 510.

The skilled person will appreciate that DTR and DSR lines have many uses but the embodiment described in relation to Figure 5 gives one example of where it finds utility.

## Claims

1. A device arranged to connect to a serial port and to use an electromagnetic link to replicate a serial connection thereto, the device comprising a link-processing module arranged to establish the electromagnetic link and at least one switching device capable of being switched from at least a first configuration to a second configuration and the link-processing module being further arranged to monitor at least one line of the serial port and the switching device being arranged to connect the or each monitored line to the link-processing module in a first and second configurations; the link-processing module being further arranged to
send a command packet across the electromagnetic link if a change is detected in the at least one monitored line; and
upon receipt of a command packet from the electromagnetic link to make a change to a pin of the serial port to which the device is connected thereby replicating a change of line represented by the command packet received thereby.

2. A device according to claim 1 which is arranged to be used to replace a serial cable.

3. A device according to claim 1 or 2 in which the link-processing module is arranged to generate a Bluetooth connection.

4. A device according to any preceding claim in which the command packet takes the form of at least one of the following; a predetermined data packet, predetermined data, and a command packet such as a MODEM status command.

5. A device according to any preceding claim which is arranged to be configured to connect to a Date Terminal Equipment (DTE) and/or a Data Communication Equipment (DCE).

6. A device according to any preceding claim in which in the first configuration uses a first level shifting circuit to provide the switching device and to be able to connect to a DTE and in the second configuration uses a second level shifting circuit, different from the first, to provide the switching device to connect to a DCE.

7. A kit comprising two wireless devices according to any of claims 1 to 6 which are arranged to communicate with one another to provide a serial connection between two devices.

8. A kit according to claim 7 in which the two devices are each one of a DTE device and a DCE device.

9. A method of replicating a serial cable using an electromagnetic link, the method comprising:
i. using a link-processing module to establish an electromagnetic link;
ii. using a switching device to connect at least one line of a serial port in either a first or a second configuration;
iii. using the link-processing module to monitor the at least one line of a serial port to which the link-processing module is connected;
iv. using link processing module to send a command packet across the electromagnetic link if a change is detected in the at least one monitored line; and
v. upon receipt, by the link-processing module, of a command packet from the electromagnetic link to make a change to a pin of the serial port to which the device is connected thereby replicating a change of line represented by the command packet received thereby.

10. A method according to claim 9 which replicates an RS232 serial connection.

11. A method according to claim 9 or 10 which uses a Bluetooth link to transmit the command signal from a first wireless device to a second wireless device .

12. A method according to claim 11 which uses the Bluetooth Serial Port Profile (SPP) to transmit data, and which may include using the MODEM status command as the command packet.

13. A machine readable medium containing instructions which when read by a machine cause that machine to perform as the device of any of claims 1 to 6; or when read by a machine cause that machine to perform the method of any of claims 9 to 12.
